# EUROPEAN PATENT APPLICATION

(11) **EP 4 235 996 A1**
(43) Date of publication of application: **30.08.2023**
(21) Application number: 20959690.7
(22) Date of filing: 26.10.2020
(51) Int. Cl.: H02J 3/00

(54) **POWER MATCHING DEVICE, POWER SYSTEM, AND POWER MATCHING METHOD**

(71) Applicant: Hitachi, Ltd., Chiyoda-ku Tokyo 100-8280 (JP)
(72) Inventor: TAKAHASHI, Hirotaka, Tokyo 100-8280 (JP)
(74) Representative: Mewburn Ellis LLP
(86) International application number: PCT/JP2020/040061
(87) International publication number: WO 2022/091172

(57) **Abstract**

A matching unit (30) includes an inquiry unit (31) that receives a suppliable electric power amount of renewable energy predicted for each period from a power generation unit (10), and inquires of each consumption unit (40), whether or not to consume the suppliable electric power amount, a feasibility confirmation unit (32) that receives electric power of each time desired to be consumed within a range of the suppliable electric power amount from the consumption unit (40) as proposal electric power consumption, and causes the power generation unit (10) to confirm whether or not the proposal electric power consumption can be supplied, and an output unit (33) that receives and sets a period in which the proposal electric power consumption can be supplied from the power generation unit (10) as a matching establishment period, and notifies the power generation unit (10) and the consumption unit (40) of the proposal electric power consumption in the establishment period.

## Description

### Technical Field

The present invention relates to an electric power matching device, an electric power system, and an electric power matching method.

### Background Art

Due to corporate social responsibility (CSR) to suppress carbon dioxide emissions, there is a need for electric power from renewable energy such as solar power generation. Since renewable energy depends on weather or the like, the amount of power generation changes with the lapse of time. The excess of the amount of power generation planned to be supplied to an electric power system cannot be supplied to the electric power system, so that the output is suppressed.

The additional electric power of which the output is suppressed can be effectively used later by being stored in an attached storage battery. PTL 1 describes a storage battery that can be retrofitted to an existing solar power generation system easily and relatively inexpensively, and a charge and discharge control device for the storage battery.

### Citation List

### Patent Literature

PTL 1: JP 2019-193317 A

### Summary of Invention

### Technical Problem

Supply and demand matching services that trade the electric power of the renewable energy are considered. In a case where a facility of a factory is operated in a planned manner with the supplied electric power, it is desirable to determine the trade content of how much supply electric power can be obtained at each time in as detail as possible. On the other hand, since renewable energy depends on weather or the like, the total amount (balancing) of supply electric power divided into periods such as 30 minutes is only roughly proposed as a planned value.

As described above, the electric power of the renewable energy (particularly, the additional electric power) is unsuitable as a product traded in the supply and demand matching service due to the unstable supply. Therefore, it is desirable to support as a system so that more renewable energy can be operated than before.

However, in the technique in the related art such as PTL 1, support is provided in terms of electric power control such as storage of renewable energy, but an aspect of trading renewable energy is not considered.

Therefore, a main object of the present invention is to promote electric power trade of renewable energy.

### Solution to Problem

In order to solve the above problems, an electric power matching device of the present invention has the following features.

An aspect of the present invention is an electric power matching device that matches a supply unit that supplies electric power of renewable energy and a consumption unit that consumes the supplied electric power, the electric power matching device including an inquiry unit that receives a suppliable electric power amount of the renewable energy predicted for each period from the supply unit and inquires of each consumption unit, whether or not to consume the suppliable electric power amount; a feasibility confirmation unit that receives electric power of each time desired to be consumed within a range of the suppliable electric power amount from the consumption unit as proposal electric power consumption, and causes the supply unit to confirm whether or not the proposal electric power consumption can be supplied; and an output unit that receives and sets a period in which the proposal electric power consumption can be supplied from the supply unit as a matching establishment period, notifies the supply unit and the consumption unit of the proposal electric power consumption in the establishment period, and instructs electric power supply and demand of the renewable energy in the future establishment period.

Other means will be described later.

### Advantageous Effects of Invention

According to the present invention, electric power trade of renewable energy can be promoted.

### Brief Description of Drawings

[FIG. 1] FIG. 1 is a configuration diagram of an electric power system according to an embodiment.
[FIG. 2] FIG. 2 is a graph illustrating an example of supply and demand mismatch of electric power.
[FIG. 3] FIG. 3 is a graph illustrating an example of supply and demand matching in a case of using an electric power system of an embodiment according to the embodiment.
[FIG. 4] FIG. 4 is a flowchart illustrating processing of a power generation prediction unit according to an embodiment.
[FIG. 5] FIG. 5 is a flowchart illustrating processing of an electric power amount setting unit according to an embodiment.
[FIG. 6] FIG. 6 is a flowchart illustrating processing of an inquiry unit according to an embodiment.
[FIG. 7] FIG. 7 is a flowchart illustrating processing of a proposal unit according to an embodiment.
[FIG. 8] FIG. 8 is a flowchart illustrating processing of a feasibility confirmation unit according to an embodiment.
[FIG. 9] FIG. 9 is a flowchart illustrating processing of a feasibility determination unit according to an embodiment.
[FIG. 10] FIG. 10 is a flowchart illustrating processing of an output unit according to an embodiment.
[FIG. 11] FIG. 11 is a flowchart showing processing of a power storage control device according to an embodiment.
[FIG. 12] FIG. 12 is a flowchart illustrating processing of a consumption control device according to an embodiment.
[FIG. 13] FIG. 13 is a flowchart illustrating processing of a situation confirmation unit according to an embodiment.
[FIG. 14] FIG. 14 is a hardware configuration diagram of a device of an electric power system according to an embodiment.

### Description of Embodiments

Hereinafter, an embodiment of the present invention will be described with reference to the drawings.

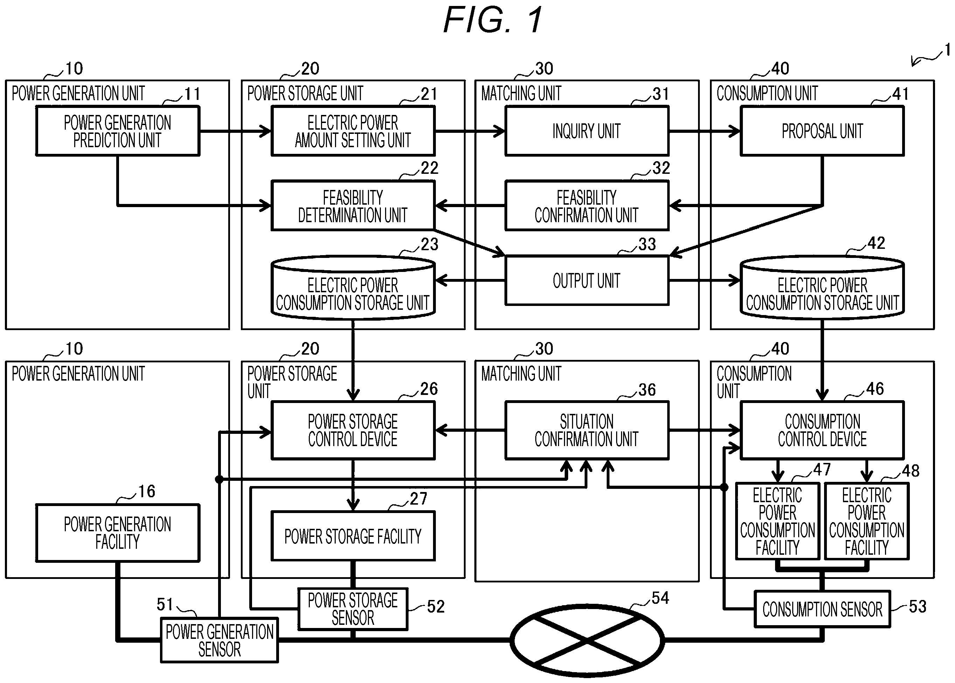

FIG. 1 is a configuration diagram of an electric power system 1.

The electric power system 1 includes a renewable energy supply unit (a power generation unit 10 and a power storage unit 20), a matching unit (electric power matching device) 30, and a consumption unit 40.

The power generation unit 10 is managed by an electric power supplier that generates renewable energy such as solar power generation and wind power generation. The power storage unit 20 is managed by a manager of a power storage facility. Note that a company of the power generation unit 10 and a company of the power storage unit 20 may be the same company or different companies.

The consumption unit 40 is managed by an electric power consumer such as a factory or a general household. The matching unit 30 mediates matching between the electric power supplier (the power generation unit 10 and the power storage unit 20) and the consumer (the consumption unit 40) of the electric power.

As a result, new demand for renewable energy can be created. The electric power of the renewable energy mediated by the matching unit 30 is desirably the additional electric power. The additional electric power is electric power that cannot flow into the electric power system due to the exceeding of the electric power demand, and is excess electric power corresponding to the suppressed electric power output.

In FIG. 1, the configuration of the power generation unit 10 and the like is divided into upper and lower parts in the drawing. The upper side of FIG. 1 is a configuration used for pre-processing before the day of electric power consumption (pre-processing in the previous day), and the lower side of FIG. 1 is a configuration used for processing in the day of electric power consumption. The power generation unit 10 includes a power generation prediction unit 11 and a power generation facility 16.

The power storage unit 20 includes an electric power amount setting unit 21, a feasibility determination unit 22, an electric power consumption storage unit 23, a power storage control device 26, and a power storage facility 27.

The matching unit 30 includes an inquiry unit 31, a feasibility confirmation unit 32, an output unit 33, and a situation confirmation unit 36.

The consumption unit 40 includes a proposal unit 41, an electric power consumption storage unit 42, a consumption control device 46, an electric power consumption facility 47, and an electric power consumption facility 48.

In FIG. 1, a thick solid line indicates a flow of electric power.

The power generation facility 16 is a facility that generates electric power consumed on the day. The electric power generated by the power generation facility 16 is sent to the consumption unit 40 via an electric power network 54, and the electric power is consumed by the consumption unit 40. In a case where the power generation facility 16 generates a large amount of power (in a case where surplus electric power is generated), the power is stored in the power storage facility 17.

On the other hand, in a case where the power generation facility 16 generates a small amount of power, the power is also discharged from the power storage facility 27 and sent to the consumption unit 40 via the electric power network 54, and the power is consumed by the consumption unit 40.

In the electric power system 1, a power generation sensor 51, a power storage sensor 52, and a consumption sensor 53 are connected by the electric power network 54.

The power generation sensor 51 includes an ammeter, a voltmeter, and the like that measure the generation electric power of the power generation facility 16. The power storage sensor includes an ammeter, a voltmeter, and the like that measure charged or discharged electric power of the power storage facility 27. The consumption sensor 53 includes an ammeter, a voltmeter, and the like that measure electric power supplied to the electric power consumption facilities 47 and 48.

Hereinafter, in various variables used for the description, a variable with " (t)" added at the end indicates a numerical value at each time (for example, every second) of electric power (unit kW) or the like. On the other hand, a variable with "(T)" at the end indicates a numerical value (for example, every 30 minutes) of a unit period of an electric power amount (unit kWh). The electric power amount for every 30 minutes is a sum (integral value) of electric power of each time included in the unit period.

First, a configuration of pre-processing will be described.

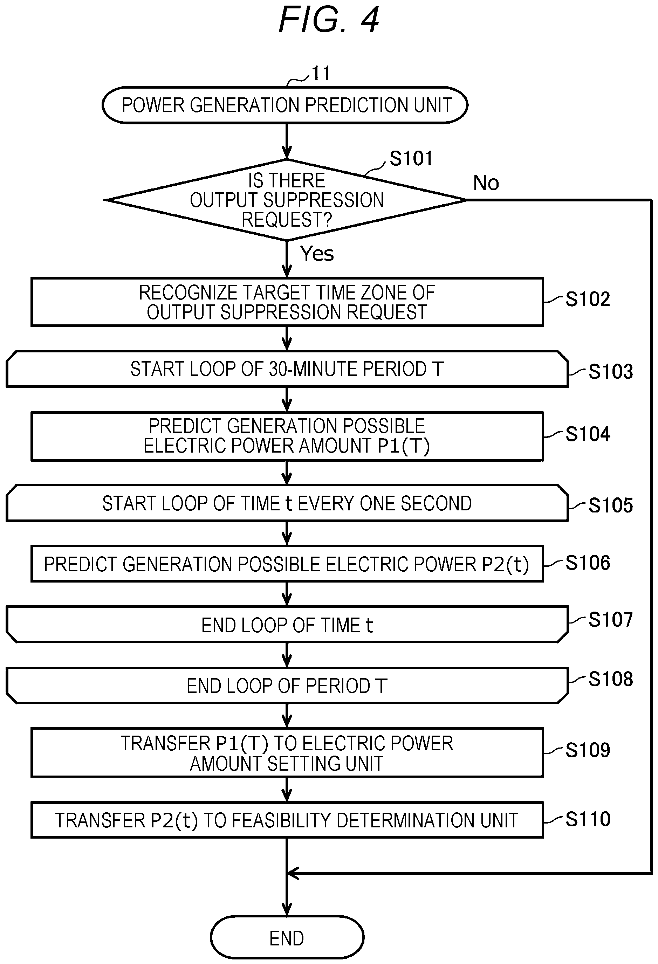

The power generation prediction unit 11 refers to the weather forecast of the previous day such as the strength of sunlight and the strength of wind, and predicts the electric power amount that can be generated on the day as a generation possible electric power amount P1(T) (details are illustrated in FIG. 4). In the power generation prediction unit 11, the power generation prediction unit 11 also predicts a generation possible electric power P2(t) at each time as details of each period T of the generation possible electric power amount P1(T).

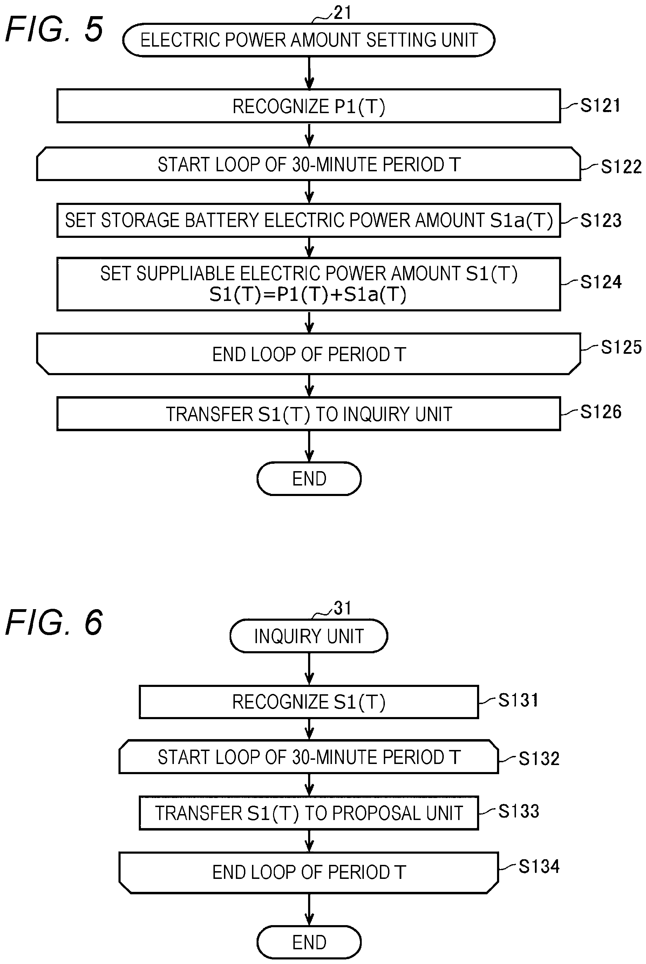

The electric power amount setting unit 21 sets a transmittable electric power amount obtained by adding the generation possible electric power amount P1(T) from the power generation prediction unit 11 and a storage battery electric power amount S1a(T) discharged from the power storage facility 27 of the own power storage unit 20, as a suppliable electric power amount S1(T) (details are illustrated in FIG. 5).

The inquiry unit 31 inquires of each consumption unit 40, whether or not to consume the suppliable electric power amount S1(T) and the details of a case of consumption (details are illustrated in FIG. 6).

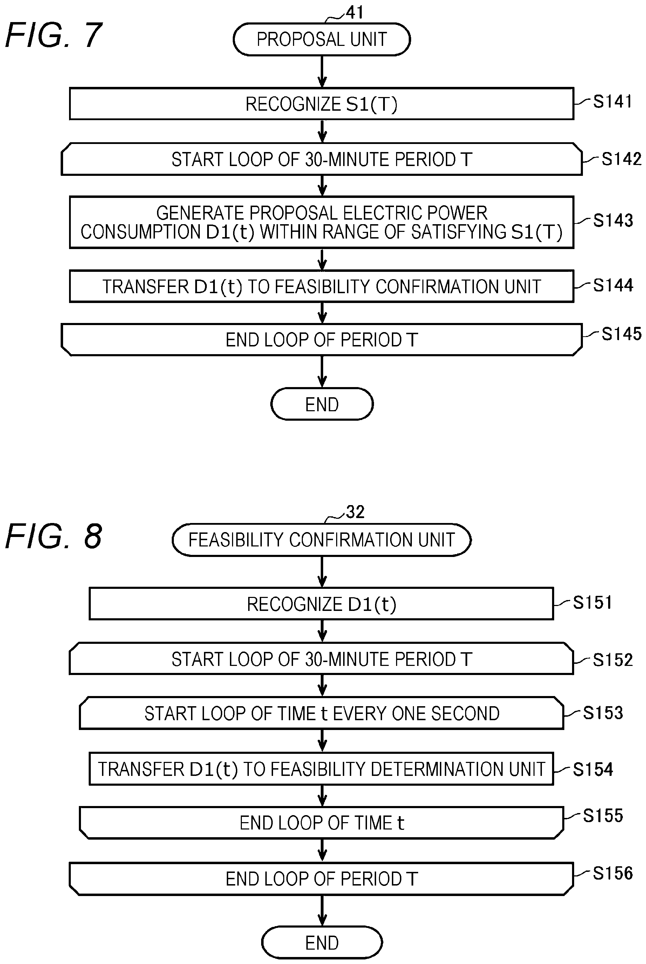

In a case of consuming the suppliable electric power amount S1(T) indicated by the inquiry unit 31, the proposal unit 41 distributes at least a part of the suppliable electric power amount S1(T) as electric power consumption data (time-series waveform data) at each time, and proposes the distribution result as proposal electric power consumption D1(t) to the matching unit 30 (details are illustrated in FIG. 7).

On the other hand, the matching is not established only for the consumer who does not need the electric power during the period T of the suppliable electric power amount S1(T) by the response indicating that the consumer does not consume the suppliable electric power amount S1(T).

Even in a case where the suppliable electric power amount S1(T) has the same numerical value (100 kWh), the proposal electric power consumption D1(t) may be waveform data in which a large amount of electric power amount (70 kWh) is consumed in the first 10 minutes during the period of 30 minutes or may be waveform data in which a large amount of electric power amount is consumed in the last 10 minutes. That is, the proposal unit 41 can create various proposal electric power consumption D1(t) according to the convenience of the consumption unit 40 from one suppliable electric power amount S1(T).

Further, the proposal unit 41 may create the proposal electric power consumption D1(t) in which all of the numerical value (100 kWh) of the suppliable electric power amount S1(T) is consumed, or may create the Proposal electric power consumption D1(t) in which a part (80 kWh) is consumed.

The feasibility confirmation unit 32 notifies the feasibility determination unit 22 of the proposal electric power consumption D1(t) from the proposal unit 41, and thereby requests the supplier to determine whether or not the proposal electric power consumption D1(t) can be output on the day (details are illustrated in FIG. 8).

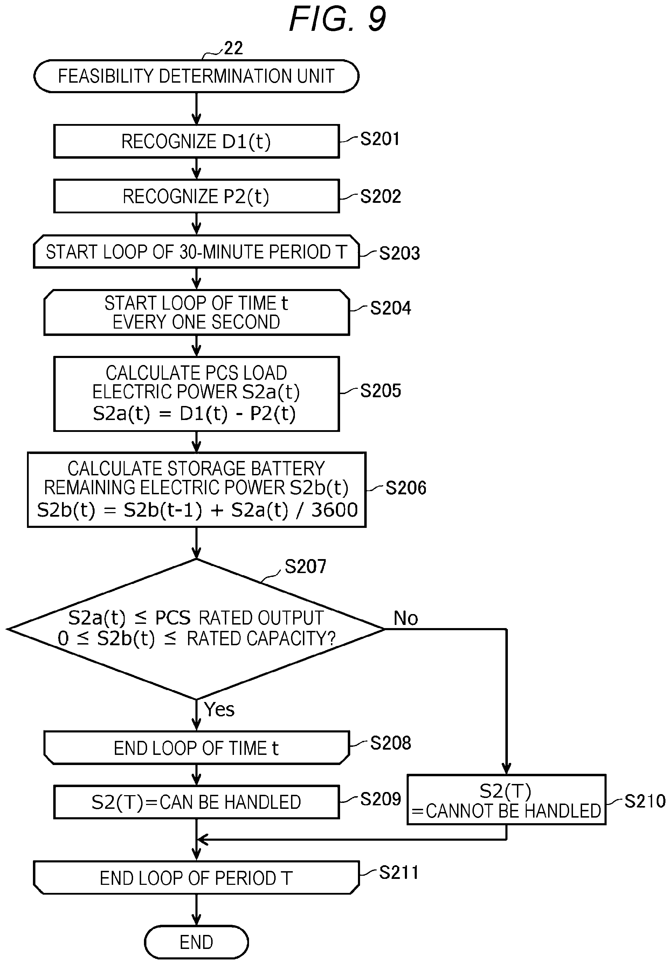

The feasibility determination unit 22 determines whether or not the proposal electric power consumption D1(t) can be supplied on the basis of the generation possible electric power P2(t) from the power generation unit 10 and the storage battery remaining electric power S2b(t) from the power storage unit 20, and notifies the output unit 33 of a feasibility result S2 (T) and the proposal electric power consumption D1(t) (details are illustrated in FIG. 9).

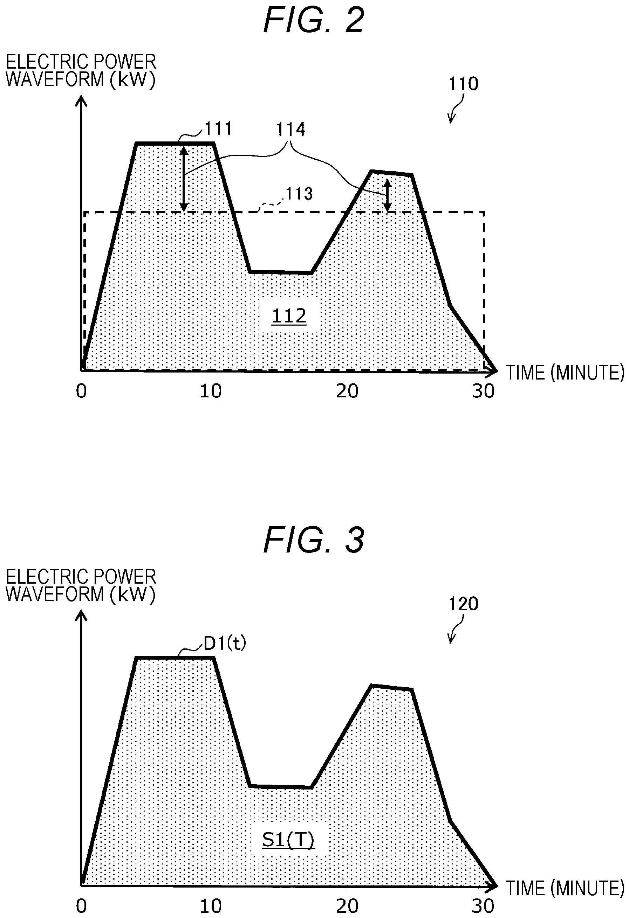

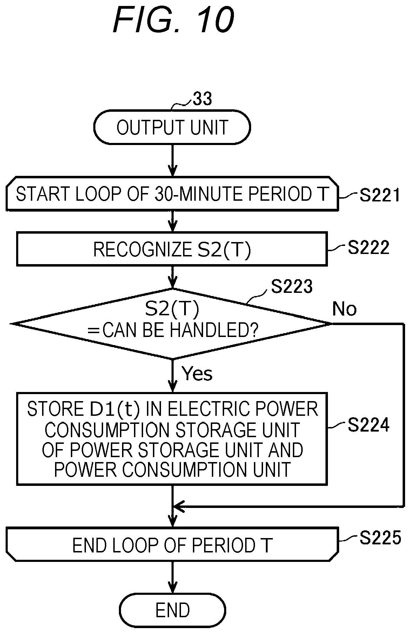

The output unit 33 outputs the proposal electric power consumption D1(t) in the period T (that is, the matching establishment period) in which the feasibility result S2(T) is possible, as waveform data for control of the daily processing, to the electric power consumption storage unit 23 of the power storage unit 20 and the electric power consumption storage unit 42 of the power consumption unit 40 (details are illustrated in FIG. 10). As a result, the electric power consumption on that day is shared between the supplier and the consumer in advance. Note that the output unit 33 may display the sharing electric power consumption on the day on a screen as described later with reference to FIG. 3.

Next, the configuration of the daily processing will be described.

The power generation facility 16 is a facility that generates renewable energy, and generates generation electric power P3(t). The generation electric power P3 (t) is measured by the power generation sensor 51, and is notified to the power storage control device 26 and the situation confirmation unit 36.

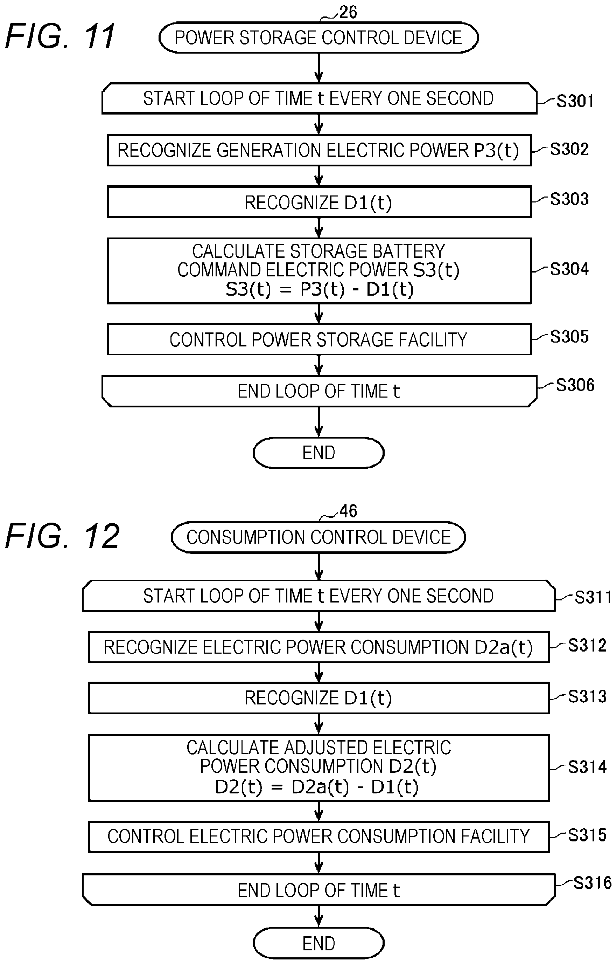

The power storage control device 26 outputs the storage battery command electric power S3 (t) to the power storage facility 27 such that the supply electric power of the day matches the proposal electric power consumption D1(t) (details are illustrated in FIG. 11). Therefore, the storage battery command electric power S3 (t) is control to charge the surplus generation electric power P3 (t) in the power storage facility 27 at time t when the generation electric power P3(t) exceeds the proposal electric power consumption D1(t). On the other hand, at time t when the generation electric power P3(t) is insufficient with respect to the proposal electric power consumption D1(t), the storage battery command electric power S3(t) is control to discharge the generation electric power P3(t) by a shortage amount from the power storage facility 27.

The power storage facility 27 performs charging or discharging according to the storage battery command electric power S3(t). The power storage sensor 52 measures charge or discharge of the power storage facility 27 as storage battery output electric power S4 (t), and notifies the situation confirmation unit 36 of the measurement result.

The consumption control device 46 of the consumption unit 40 outputs the adjusted electric power consumption D2(t) to the electric power consumption facilities 47 and 48 so that the electric power consumption D2a(t) of the electric power consumption facilities 47 and 48 matches the proposal electric power consumption D1(t) of the electric power consumption storage unit 42 (details are illustrated in FIG. 12). The consumption sensor 53 measures the electric power consumption D2a(t) of the electric power consumption facilities 47 and 48, and notifies the consumption control device 46 and the situation confirmation unit 36 of the measurement result.

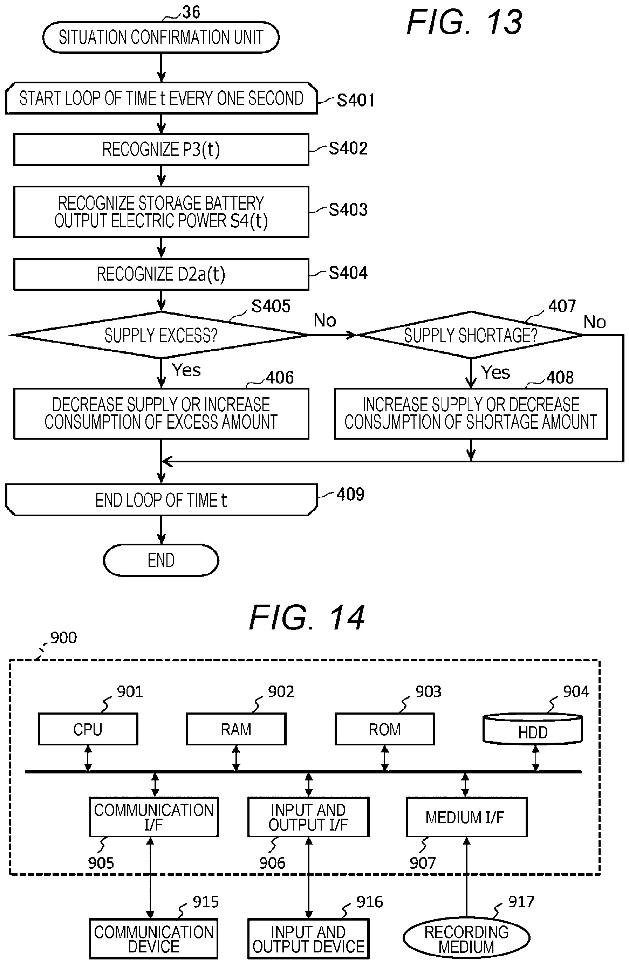

The situation confirmation unit 36 confirms a situation in which inconsistency has occurred in the generation electric power P3(t), the storage battery output electric power S4 (t), and the electric power consumption D2a(t) on the day with respect to the proposal electric power consumption D1(t) shared between the supplier and the consumer in advance, and adjusts the supply and demand balance of electric power to be matched afterwards (details are illustrated in FIG. 13).

FIG. 2 is a graph illustrating an example of supply and demand mismatch of electric power. In a graph 110, the horizontal axis indicates each time (minute), and the vertical axis indicates electric power at each time.

The supplier notifies the consumer of a predetermined generation possible electric power amount (area of a region 112, for example, 100 kWh) as the balancing (planned value) in a period of every 30 minutes. It is assumed that the consumer desires electric power consumption in which a large amount of electric power is consumed in the first 10 minutes and the last 10 minutes as indicated by a graph line 111 within a range of complying with the notified predetermined generation possible electric power amount.

However, the supplier only needs to perform constant electric power supply for 30 minutes as indicated by a wavy line 113 within a range of complying with the predetermined generation possible electric power amount. In this case, although both the consumer and the supplier comply with the balancing (although the area of the graph is the same), a period of electric power shortage 114 occurs for the consumer. Therefore, in order to match the supply and demand in the time section, it is necessary to separately procure adjustment power such as preparing a storage battery on the consumer side, which is a burden. The adjustment power is an adjustment mechanism that matches power generation and consumption at every moment.

Such supply and demand mismatch on a time basis has been a barrier to widespread use of renewable energy.

FIG. 3 is a graph illustrating an example of supply and demand matching in a case of using the electric power system 1 of the embodiment.

First, in the graph 110 of FIG. 2, the wavy line 113 of the supply electric power and the graph line 111 of the electric power consumption do not match.

On the other hand, in a graph 120 of FIG. 3, the proposal unit 41 of the consumption unit 40 prepares the proposal electric power consumption D1(t) suitable for the suppliable electric power amount S1(T), and causes the feasibility determination unit 22 of the power storage unit 20 to confirm the proposal electric power consumption D1(t). As a result, it is determined that the same proposal electric power consumption D1(t) is to be supplied and consumed between the supplier and the consumer by the day before the day of consumption.

Therefore, since the power storage control device 26 and the consumption control device 46 control the facilities so that the supply and demand match in time units according to the proposal electric power consumption D1(t) on that day, it is not necessary for the consumer side to separately prepare the adjustment power as illustrated in FIG. 2.

The graph 120, which is time-series waveform data, is displayed on a screen of a display device of the supplier or the consumer from the output unit 33, so that the plan of the electric power control of the day can be understood in detail.

FIG. 4 is a flowchart illustrating processing of the power generation prediction unit 11.

The power generation prediction unit 11 determines whether or not there is a request for suppressing the electric power output from the power generation facility 16 (S101). In a case of Yes in S101, the processing proceeds to S102 to newly supply the additional electric power to the consumer, and in a case of No, the processing is ended.

The power generation prediction unit 11 recognizes a target time zone in which the output suppression request is made (S102).

The power generation prediction unit 11 executes a loop of the 30-minute period T (S103 to S108), and refers to the weather forecast or the like of the previous day such as the strength of sunlight and the strength of wind to predict the generation possible electric power amount P1(T) of each period T of the day (S104).

The power generation prediction unit 11 executes a loop of time t every one second (S105 to S107), and predicts the generation possible electric power P2(t) of each time t constituting the generation possible electric power amount P1(T) (S106).

The power generation prediction unit 11 transfers the generation possible electric power amount P1(T) predicted in S104 to the electric power amount setting unit 21 (S109), and transfers the generation possible electric power P2(t) predicted in S106 to the feasibility determination unit 22 (S110).

FIG. 5 is a flowchart illustrating processing of the electric power amount setting unit 21.

The electric power amount setting unit 21 recognizes the generation possible electric power amount P1(T) transferred in S109 (S121). The electric power amount setting unit 21 executes a loop of 30-minute period T (S122 to S125), and sets the storage battery electric power amount S1a(T) indicating the electric power amount that can be discharged by the power storage facility 27 (S123).

Then, the electric power amount setting unit 21 sets the suppliable electric power amount S1(T) indicating the electric power amount that can be delivered by the supplier by a calculation formula "S1(T) = P1(T) + S1a (T) " (S124), and transfers the suppliable electric power amount S1(T) to the inquiry unit 31 (S126).

FIG. 6 is a flowchart illustrating processing of the inquiry unit 31.

The inquiry unit 31 recognizes the suppliable electric power amount S1(T) transferred in S126 (S131). The inquiry unit 31 executes a loop of the 30-minute period T (S132 to S134), and transfers the suppliable electric power amount S1(T) to the proposal unit 41 (S133). As a result, the inquiry unit 31 sells the additional electric power to each consumption unit 40. That is, the flowchart of FIG. 6 performs information processing of "receiving the suppliable electric power amount of the renewable energy predicted for each period from the supply unit (the power generation unit 10 and the power storage unit 20) and inquiring of each consumption unit 40 whether or not to consume the suppliable electric power amount".

FIG. 7 is a flowchart illustrating processing of the proposal unit 41.

The proposal unit 41 recognizes the suppliable electric power amount S1(T) transferred in S133 (S141). The proposal unit 41 executes a loop of the 30-minute period T (S142 to S145), and generates the proposal electric power consumption D1(t) within a range of satisfying the suppliable electric power amount S1(T) (S143). As illustrated in FIG. 3, the proposal electric power consumption D1(t) is time-series waveform data indicating how the additional electric power is consumed at each time.

The proposal unit 41 transfers the created proposal electric power consumption D1(t) to the feasibility confirmation unit 32 (S144).

FIG. 8 is a flowchart illustrating processing of the feasibility confirmation unit 32.

The feasibility confirmation unit 32 recognizes the proposal electric power consumption D1(t) transferred in S144 (S151).

The feasibility confirmation unit 32 executes a loop of the 30-minute period T (S152 to S156), executes a loop of time t every one second (S153 to S155), and transfers the proposal electric power consumption D1(t) of each time t to the feasibility determination unit 22 (S154).

As a result, the feasibility confirmation unit 32 requests the feasibility determination unit 22 to determine whether or not the supplier can output the proposal electric power consumption D1(t) on the day.

That is, the flowchart of FIG. 8 illustrates the information processing of the feasibility confirmation unit 32 of "receiving electric power of each time desired to be consumed within a range of the suppliable electric power amount from the consumption unit as the proposal electric power consumption and causing the supply unit to confirm whether or not the proposal electric power consumption can be supplied".

FIG. 9 is a flowchart illustrating processing of the feasibility determination unit 22.

The feasibility determination unit 22 recognizes the proposal electric power consumption D1(t) transferred in S154 (S201), and recognizes the generation possible electric power P2 (t) transferred in S110 (S202) . The feasibility determination unit 22 executes a loop of the 30-minute period T (S203 to S211), and executes a loop of time t every one second (S204 to S208).

The feasibility determination unit 22 calculates power conditioning system (PCS) load electric power S2a(t) indicating a load applied to a PCS in the power storage facility 27 by a calculation formula "S2a(t) = D1(t) - P2(t)" (S205).

The feasibility determination unit 22 calculates the storage battery remaining electric power S2b(t) of each time t by a calculation formula "S2b(t) = S2b(t-1) + S2a(t)/3600" (S206). According to whether or not "S2a(t) ≤ PCS rated output" and "0 ≤ S2b(t) ≤ rated capacity" are satisfied, the feasibility determination unit 22 determines whether or not the proposal electric power consumption D1(t) can be handled (supplied) by the power generation unit 10 and the power storage unit 20 (S207).

In a case of Yes in S207 at all times t in the period T, the feasibility determination unit 22 sets the feasibility result S2(T) = can be handled (S209). In a case of No in S207 at a certain time t in the period T, the feasibility determination unit 22 sets the feasibility result S2(T) = cannot be handled (S210). The feasibility determination unit 22 notifies the output unit 33 of the feasibility result S2 (T) and the proposal electric power consumption D1(t).

FIG. 10 is a flowchart illustrating processing of the output unit 33.

The output unit 33 executes a loop of the 30-minute period T (S221 to S225), and recognizes the feasibility result S2 (T) notified from the feasibility determination unit 22 (S222).

The output unit 33 determines whether or not the feasibility result S2(T) = can be handled (S223), and in a case of Yes in S223, the output unit 33 stores the proposal electric power consumption D1(t) in the electric power consumption storage unit 23 of the power storage unit 20 and the electric power consumption storage unit 42 of the power consumption unit 40 (S224).

That is, the flowchart of FIG. 10 illustrates information processing of the output unit 33 of "receiving and setting a period in which the proposal electric power consumption can be supplied from the supply unit as a matching establishment period, notifying the supply unit and the consumption unit of the proposal electric power consumption in the establishment period, and instructing electric power supply and demand of the renewable energy in the future establishment period".

FIG. 11 is a flowchart illustrating processing of the power storage control device 26.

The power storage control device 26 executes a loop of time t every one second (S301 to S306), and recognizes the generation electric power P3(t) of the renewable energy of the day by the power generation facility 16 on the basis of the measurement value from the power generation sensor 51 (S302) .

The power storage control device 26 recognizes the proposal electric power consumption D1(t) read from the electric power consumption storage unit 23 (S303), and calculates the storage battery command electric power S3(t) by a calculation formula "S3 (t) = P3(t) - D1 (t)" (S304). The storage battery command electric power S3 (t) is an output command value to the power storage facility 27, is a charge command in a case where the numerical value is positive, and is a discharge command in a case where the numerical value is negative.

The power storage control device 26 controls the power storage facility 27 according to the storage battery command electric power S3 (t) (S305) to adapt the supply electric power of the day to the proposal electric power consumption D1(t) .

FIG. 12 is a flowchart illustrating processing of the consumption control device 46.

The consumption control device 46 executes a loop of time t every one second (S311 to S316), and recognizes the electric power consumption D2a(t) of the day by the electric power consumption facilities 47 and 48 on the basis of the measurement value from the consumption sensor 53 (S312).

The consumption control device 46 recognizes the proposal electric power consumption D1(t) read from the electric power consumption storage unit 42 (S313), and calculates the adjusted electric power consumption D2(t) by a calculation formula "D2(t) = D2a(t) - D1 (t)" (S314).

The consumption control device 46 controls the electric power consumption facilities 47 and 48 according to the adjusted electric power consumption D2(t) to adapt the electric power consumption of the day to the proposal electric power consumption D1(t) (S315).

FIG. 13 is a flowchart illustrating processing of the situation confirmation unit 36.

The situation confirmation unit 36 executes a loop of time t every one second (S401 to S409).

The situation confirmation unit 36 recognizes the generation electric power P3 (t) from the power generation sensor 51 (S402), recognizes the storage battery output electric power S4 (t) from the power storage sensor 52 (S403), and recognizes the electric power consumption D2a(t) from the consumption sensor 53 (S404).

The situation confirmation unit 36 determines whether or not the electric power supply on the day is excessive by a determination formula "P3 (t) - S4 (t) > D2a (t)" (S405). In a case where the determination formula is satisfied (S405, Yes), the situation confirmation unit 36 controls the power storage facility 27 to reduce the supply of the excess amount (P3(t) - S4(t) - D2a(t)) or controls the electric power consumption facilities 47 and 48 to increase the consumption of the excess amount (S406). Note that the control for reducing the supply is control for reducing the discharge amount of the power storage facility 27 or control for increasing the charge amount of the power storage facility 27.

The situation confirmation unit 36 determines whether or not the electric power supply on the day is insufficient by a determination formula "P3 (t) - S4 (t) < D2a(t)" (S407). In a case where the determination formula is satisfied (S407, Yes), the situation confirmation unit 36 controls the power storage facility 27 to increase the supply of the shortage amount (D2a(t) - P3(t) + S4 (t)) or controls the electric power consumption facilities 47 and 48 to reduce the consumption of the shortage amount (S408). Note that the control for increasing the supply is control for increasing the discharge amount of the power storage facility 27 or control for reducing the charge amount of the power storage facility 27.

As a result, the situation confirmation unit 36 matches the supply and demand of the electric power afterwards in a case where the proposal electric power consumption D1(t) agreed in advance deviates on the day. That is, in a case where the electric power supply and demand of the renewable energy deviating from the proposal electric power consumption is performed, the situation confirmation unit 36 adjusts the electric power afterwards to adapt the balance of the electric power supply and demand.

FIG. 14 is a hardware configuration diagram in which each processing unit (the matching unit 30 and the like) of the electric power system 1 is operated.

Each processing unit of the electric power system 1 is configured as a computer 900 including a CPU 901, a RAM 902, a ROM 903, an HDD 904, a communication I/F 905, an input and output I/F 906, and a medium I/F 907.

The communication I/F 905 is connected to an external communication device 915. The input and output I/F 906 is connected to an input and output device 916. The medium I/F 907 reads and writes data from and in a recording medium 917. Further, the CPU 901 controls each processing unit by executing a program (also referred to as an application or an application for short thereof) read into the RAM 902. Then, the program can be distributed via a communication line or distributed by being recorded in the recording medium 917 such as a CD-ROM.

In the electric power system 1 of the present embodiment described above, the matching unit 30 notifies the consumption unit 40 of the suppliable electric power amount S1(T) from the power storage unit 20, notifies the power storage unit 20 of the proposal electric power consumption D1(t) from the consumption unit 40, and promotes the power trade of the renewable energy based on the feasibility result S2 (T) . This is advantageous for both supply and demand of the renewable energy as follows.
▪ Suppliers can operate more renewable energy than before by promoting the trade of the additional electric power of the renewable energy.
▪ Consumers can consume electric power of the renewable energy with less adjustment power and less burden than before.

Note that the present invention is not limited to the above-described embodiments, and includes various modifications. For example, the respective embodiments described above are described in detail in order to describe the present invention for easy understanding, and are not necessarily limited to those having all the described configurations.

In addition, it is possible to replace part of the configuration of a certain embodiment with part of the configuration of other embodiments, and further to add the configurations of other embodiments to the configuration of a certain embodiment.

In addition, it is possible to add, delete, and replace other configurations for a part of the configuration of each embodiment. In addition, part or all of the above-described configurations, functions, processing units, processing means, and the like may be realized by hardware, for example, by designing with an integrated circuit.

In addition, each of the above-described configurations, functions, and the like may be realized by software by a processor interpreting and executing a program for realizing each function.

Information such as a program, a table, and a file for realizing each function can be stored in a recording device such as a memory, a hard disk, and a solid state drive (SSD), or a recording medium such as an integrated circuit (IC) card, an SD card, and a digital versatile disc (DVD). The cloud can also be utilized.

In addition, control lines and information lines indicate what is considered to be necessary for the description, and do not necessarily indicate all the control lines and the information lines on the product. In practice, it may be considered that almost all the configurations are connected to each other.

Furthermore, the communication means connecting the respective devices is not limited to the wireless LAN, and may be changed to a wired LAN or other communication means. Reference Signs List

- 1: electric power system
- 10: power generation unit (supply unit)
- 11: power generation prediction unit
- 16: power generation facility
- 20: power storage unit (supply unit)
- 21: electric power amount setting unit
- 22: feasibility determination unit
- 23: electric power consumption storage unit
- 26: power storage control device
- 27: power storage facility
- 30: matching unit (electric power matching device)
- 31: inquiry unit
- 32: feasibility confirmation unit
- 33: output unit
- 36: situation confirmation unit
- 40: consumption unit
- 41: proposal unit
- 42: electric power consumption storage unit
- 46: consumption control device
- 47: electric power consumption facility
- 48: electric power consumption facility
- 51: power generation sensor
- 52: power storage sensor
- 53: consumption sensor
- 54: electric power network

## Claims

1. An electric power matching device that matches a supply unit that supplies electric power of renewable energy and a consumption unit that consumes the supplied electric power, the electric power matching device comprising:
an inquiry unit that receives a suppliable electric power amount of the renewable energy predicted for each period from the supply unit and inquires of each consumption unit, whether or not to consume the suppliable electric power amount;
a feasibility confirmation unit that receives electric power of each time desired to be consumed within a range of the suppliable electric power amount from the consumption unit as proposal electric power consumption, and causes the supply unit to confirm whether or not the proposal electric power consumption can be supplied; and
an output unit that receives and sets a period in which the proposal electric power consumption can be supplied from the supply unit as a matching establishment period, notifies the supply unit and the consumption unit of the proposal electric power consumption in the establishment period, and instructs electric power supply and demand of the renewable energy in a future establishment period.

2. The electric power matching device according to claim 1, further comprising:
a situation confirmation unit,
wherein in a case where electric power supply and demand of the renewable energy deviating from the proposal electric power consumption is performed in the establishment period, the situation confirmation unit adjusts the electric power afterwards to adapt balance of the electric power supply and demand.

3. The electric power matching device according to claim 1, wherein the output unit displays the proposal electric power consumption as time-series waveform data on a screen of a display device.

4. An electric power system comprising:
the electric power matching device according to any one of claims 1 to 3; and
the consumption unit,
wherein the consumption unit creates the proposal electric power consumption distributed such that at least a part of the suppliable electric power amount of a predetermined period indicated by the inquiry unit is consumed at each time in the predetermined period.

5. An electric power system comprising:
the electric power matching device according to any one of claims 1 to 3; and
the supply unit,
wherein the supply unit confirms whether or not the proposal electric power consumption of a predetermined period for which confirmation is requested by the feasibility confirmation unit can be supplied on the basis of generation possible electric power predicted for each time and remaining electric power of a storage battery, and
in a case where the proposal electric power consumption can be supplied at each time of the predetermined period, the supply unit responds to the feasibility confirmation unit as a period in which the proposal electric power consumption can be supplied.

6. An electric power matching method of an electric power matching device that matches a supply unit that supplies electric power of renewable energy and a consumption unit that consumes the supplied electric power, and includes an inquiry unit, a feasibility confirmation unit, and an output unit, wherein
the inquiry unit receives a suppliable electric power amount of the renewable energy predicted for each period from the supply unit, and inquires of each consumption unit, whether or not to consume the suppliable electric power amount,
the feasibility confirmation unit receives electric power of each time desired to be consumed within a range of the suppliable electric power amount from the consumption unit as proposal electric power consumption, and causes the supply unit to confirm whether or not the proposal electric power consumption can be supplied, and
the output unit receives and sets a period in which the proposal electric power consumption can be supplied from the supply unit as a matching establishment period, notifies the supply unit and the consumption unit of the proposal electric power consumption in the establishment period, and instructs electric power supply and demand of the renewable energy in the future establishment period.
